# EUROPÄISCHE PATENTSCHRIFT

(11) **EP 0 641 280 B1**
(45) Veröffentlichungstag und Bekanntmachung des Hinweises auf die Patenterteilung: **07.07.1999**
(21) Anmeldenummer: 94909082.3
(22) Anmeldetag: 24.02.1994
(51) Int. Cl.: B32B 15/06, E04B 1/84

(54) **VORHANGPLATTE FÜR GEBÄUDE**
CURTAIN WALL FOR BUILDINGS
MUR-RIDEAU POUR BATIMENTS

(30) Priorität: 24.02.1993 DE 4305683
(43) Veröffentlichungstag der Anmeldung: 08.03.1995
(73) Patentinhaber: DÄTWYLER AG GUMMIWERKE, 6460 Altdorf (CH); RHEINZINK CONSULTING UND ENGINEERING AG, 5405 Baden (CH)
(72) Erfinder: DENIER, Gustav, CH-6460 Altdorf (CH); OTT-MORBECH, Kurt, CH-5753 Remetschwil (CH)
(74) Vertreter: Flügel, Otto, Dipl.-Ing.
(86) Internationale Anmeldenummer: EP9400572
(87) Internationale Veröffentlichungsnummer: WO9419183

(56) Entgegenhaltungen:
- EP-A- 0 335 642
- DE-A- 2 249 507
- US-A- 3 781 185
- DATABASE WPI Week 9013, Derwent Publications Ltd., London, GB; AN 90-096949 & JP,A,2 050 827 (NITTO DENKO CORP) 20. Februar 1990

## Beschreibung

Die Erfindung betrifft eine Vorhangplatte für Gebäude nach dem Oberbegriff des beigefügten Anspruchs 1. Eine einer solchen Vorhangplatte entsprechende Verbundmaterialausbildung zur Verwendung an Gebäuden ist aus der US-A-3 781 185 bekannt, auf die weiter unten näher eingegangen wird.

Aus bauphysikalischen Gründen werden Gebäude mit, an ihrer der Gebäudewand zugewendeten Rückfläche belüfteten Vorhangplatten ausgerüstet. Diese bestehen heute überwiegend aus zwei Leichtmetallblechen mit dazwischen angebrachter, beide Bleche verbindender Thermoplastschicht. Bei der Anbringung der Platte bleibt zwischen Gehäuseaußenwand und Innenfläche der Vorhangplatte eine Luftschicht bestehen.

Die bisher gebräuchlichen, aus Leichmetallblechen und Thermoplastschicht bestehenden Vorhangplatten weisen folgende Nachteile auf:
1) Die Vorhangplatten können ohne mechanische Bearbeitung der Thermoplastschicht nicht abgebogen und nicht bombiert werden.
2) Die Thermoplastschicht ist nicht brandfest. Deshalb dürfen damit ausgerüstete Gebäude nur bis zu drei Geschosse aufweisen.
3) Die Vorhangplatten sind wegen ihrer geringen Masse nicht ausreichend schalldämmend.
4) Die mit Thermoplastschicht ausgerüsteten Vorhangplatten sind schwer recyclebar.
5) Die mit Thermoplastschicht ausgerüsteten Vorhangplatten sind im Herstellverfahren nicht prägbar.

Die genannten Nachteile zu beseitigen hat sich die Erfindung zur Aufgabe gesetzt. Sie wird durch die kennzeichnenden Merkmale des Anspruchs 1 gelöst.

Aus der eingangs erwähnten US-A-3 781 185 ist zwar bereits ein Verbundmaterial zur Verwendung bei Gebäuden bekannt, das aus zwei über einen Gummiwerkstoff miteinander verbundenen Metallplatten besteht. Um jedoch verschiedene Metalle, wie z.B. Kupfer oder rostfreier Stahl oder dergleichen als Material für die Metallplatten ohne Oberflächenbehandlung verwenden zu können, wird bei dem bekannten Verbundmaterial ein ganz spezieller Gummiwerkstolf verwendet, der unter Hitzeeinwirkung zum Haften gebracht wird. Auf diese Weise entsteht ein Verbundmaterial, das extrem schwierig zu biegen ist und Nachteile aufweist, die mit den oben unter 1) - 5) erwähnten Nachteilen vergleichbar sind.

Da als elastische Schicht ein Werkstoff auf Basis Elastomer besonders geeignet ist, weist die erfindungsgemäße Vorhangplatte als Verbundwerkstoff ein Elastomer auf. Damit können Platten an Ecken und Längsseiten abgerundet und die gesamte Platte bombiert werden. Zink ist korrosionsfester und besser kohäsiv mit dem Elastomer-Werkstoff zu verbinden. Zink weist darüber hinaus in dem erforderlichen Temperaturbereich eine derart geringe Wärmedehnung auf, daß aneinander gereihte Platten in der Aufhängung an den Mauerwänden keine Schwierigkeiten bereiten. Die Platten sind recyclebar, weil die Elastomerschicht beispielsweise im Stickstoffbad losgelöst werden kann. Infolge ihrer größeren Masse sind vulkanisierte Zinkplatten bei gleichen Abmessungen wie Aluminium-Thermoplastplatten erheblich schal- und brandfester, so daß beliebig viele Geschosse damit ausgerüstet werden können.

Die Verwendung eines Elastomer für die Vorhangplatten bietet über die genannten Eigenschaften hinaus den Vorteil, daß die Befestigungsschellen oder -rahmen an die Elastomerbeschichtung bei der Plattenfabrikation oder auch nachträglich anvulkanisiert werden können, so daß die Zinkbleche nicht gebohrt zu werden brauchen und eine elastische Aufhängung gewährleistet werden kann.

Vorzugsweise erhält die Vorhangplatte im Herstellverfahren ihre Form durch eine Prägeoperation.

In noch weiterer Ausbildung der Erfindung wird die, die beiden Innenflächen der Bleche verbindende Elastomerschicht mit einer Gewebeschicht, vorzugsweise aus Polyamid ausgerüstet. Durch diese Maßnahme entstehen beim Verbinden der beiden Zinkbleche mit den Elastomerschichten unvermeidliche Luftblasen, welche infolge geringer Unebenheiten auf den, den Elastomerschichten zugewendeten Metallflächen entstehen und nicht mehr entweichen können. Bei ansteigendem Preßdruck setzen sich diese Blasen, die Elastomerschichten durchdringend, auf die Gewebeschicht in mikroskopisch kleinen Poren ab, ohne die Homogenität der Elastomerschichten zu beeinträchtigen. Die Verbindung der beiden Bleche wird dadurch sichergestellt.

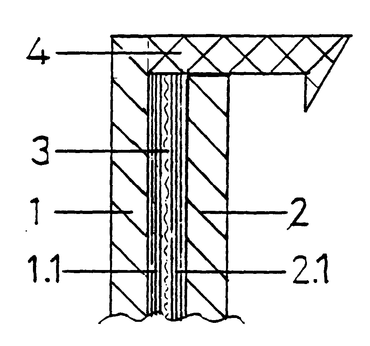

In der Abbildung ist der Rand einer Vorhangplatte der Erfindung mit aufvulkanisiertem Befestigungsbügel im Querschnitt dargestellt. In der Abbildung sind mit 1 und 2 die Zinkbleche bezeichnet, welche auf den einander zugekehrten Flächen mit den Elastomerbeschichtungen 1.1 und 2.1 ausgerüstet sind, zwischen die bei der Herstellung die Gewebeschicht 3 gelegt wird, welche beim Zusammenpressen die zwischen den Blechen und den Elastomeroberflächen eingeschlossenen Luftblasen absorbiert. Mit 4 ist der aufvulkanisierte Befestigungsbügel gekennzeichnet.

## Patentansprüche

1. Aus zwei, durch eine elastische Schicht verbundenen Blechplatten bestehende Vorhangplatte für Gebäude, mit einem Elastomer als Verbundwerkstoff,
**dadurch gekennzeichnet,**
daß mindestens eine der beiden Platten (1, 2) aus Zink besteht und daß das als Verbundwerkstoff dienende Elastomer (1.1, 2.1) auf die Bleche aufvulkanisiert ist.

2. Vorhangplatte nach Anspruch 1,
**dadurch gekennzeichnet,**
daß zwischen den, auf die Bleche (1, 2) aufvulkanisierten Elastomerschichten (1.1, 1.2) eine Gewebeschicht (3), vorzugsweise aus Polyamid, angeordnet ist, welche beim Zusammenvulkanisieren Gasblasen absorbiert.

3. Vorhangplatte nach Anspruch 1,
**dadurch gekennzeichnet,**
daß die Aufhängebügel oder -rahmen (4) auf der Elastomerschicht (1.1, 1.2) durch Vulkanisieren befestigt sind.

4. Vorhangplatte nach Anspruch 1,
**dadurch gekennzeichnet,**
daß ihre Formgebung im Herstellverfahren durch eine Prägeoperation vorgenommen wird.

## Claims

1. Curtain wall for buildings, which consists of two metal sheets joined by a resilient layer, having an elastomer as the bonding material, characterised in that at least one of the two metal sheets (1, 2) consists of zinc and the elastomer (1.1, 2.1) serving as the bonding material is vulcanised on to the metal sheets.

2. Curtain wall according to claim 1, characterised in that, between the elastomer layers (1.1, 1.2) vulcanised onto the sheets (1, 2), there is a layer of woven fabric (3), preferably consisting of polyamide, which absorbs gas bubbles during the vulcanisation process.

3. Curtain wall according to claim 1, characterised in that the suspension brackets or frames (4) are attached to the elastomer layer (1.1, 1.2) by vulcanisation.

4. Curtain wall according to claim 1, characterised in that it is shaped by a stamping operation during the manufacturing process.

## Revendications

1. Panneau de mur-rideau de bâtiment, composé de deux plaques de tôle reliées par une couche élastique constituée par un élastomère,
caractérisé en ce qu'
au moins l'une des deux plaques (1, 2) est en zinc, l'élastomère (1.1, 1.2), jouant le rôle de matériau de liaison, étant fixé sur les tôles par vulcanisation.

2. Panneau de mur-rideau selon la revendication 1,
caractérisé en ce qu'
entre les couches (1.1, 1.2) fixées sur les tôles (1, 2) par vulcanisation, est placée une couche de tissu (3), en polyamide de préférence, qui absorbe les bulles de gaz lors de la vulcanisation de l'ensemble.

3. Panneau de mur-rideau selon la revendication 1,
caractérisé en ce que
les crochets ou cadres de suspension (4) sont fixés sur la couche d'élastomère (1.1, 1.2) par vulcanisation.

4. Panneau de mur-rideau selon la revendication 1,
caractérisé en ce qu'
il reçoit sa forme, à la fabrication, par une opération d'estampage.
